# EUROPÄISCHE PATENTANMELDUNG

(11) **EP 4 131 683 A1**
(43) Veröffentlichungstag der Anmeldung: **08.02.2023**
(21) Anmeldenummer: 22188071.9
(22) Anmeldetag: 01.08.2022
(51) Int. Cl.: H02G 3/00

(54) **BAUGRUPPE EINES KABELTRAGSYSTEMS**

(30) Priorität: 03.08.2021 DE 202021104125 U
(71) Anmelder: OBO Bettermann Produktion Deutschland GmbH & Co.KG, 58710 Menden (DE)
(72) Erfinder: Große Gehling, Andreas, 58710 Menden (DE); Kutschelis, Kevin, 58675 Hemer (DE)
(74) Vertreter: Haverkamp Patentanwälte PartG mbB

(57) **Zusammenfassung**

Die Erfindung betrifft eine Baugruppe eines Kabeltragsystems 1 umfassend einen Ausleger 2 zum Abstützen einer Kabeltrasse sowie ein Anschlussstück 4 mit einem Festlegeabschnitt 7 zum Festlegen an dem Ausleger 2. Das Anschlussstück 4 greift in zumindest eine Aussparung in einer Wand des Auslegers 2 zum Ausbilden eines kraftübertragenden Formschlusses in Längserstreckungsrichtung des Auslegers 2 mit zumindest einem Riegelelement ein und mit zumindest einem sich an den Festlegeabschnitt in Längserstreckung des Auslegers 2 anschließenden Befestigungsabschnitt zum Anschließen an ein die Baugruppe tragendes Teil 3.

## Beschreibung

Die Erfindung betrifft eine Baugruppe eines Kabeltragsystems, umfassend einen Ausleger zum Abstützen einer Kabeltrasse.

Kabeltragsysteme dienen dem Tragen von Kabeln im Raum, typischerweise in einem Gebäude. Hierzu verfügt das Kabeltragsystem über eine Kabeltrasse. Auf der Kabeltrasse sind Kabel und Leitungen geführt bzw. gelegt. Die Kabeltrasse kann etwa nach Art einer Kabelrinne oder eines Kabelkanals, gebildet durch ein oder mehrere Kabeltrassenelemente, ausgeführt sein. Eine andere Möglichkeit ist das Vorsehen von einzelnen Sprossen, über die Kabel abgestützt werden; ein durchgängiges Trassenelement wird hierdurch eingespart.

Eine Möglichkeit der Abstützung einer Kabeltrasse besteht in einer seitlichen Befestigung derselben. Hierfür sind Ausleger vorgesehen, durch die die Kabeltrasse an einem senkrechten Teil abgestützt ist und zu diesem Zweck an einem einen Ausleger tragenden Teil befestigt sind. Dieses Teil kann beispielsweise eine Wand, beispielsweise eine Gebäudewand, oder ein an einer Decke befestigter, hiervon herunterragender Hängestiel sein. Zur Ausbildung der Kabeltrasse können etwaige Kabel oder Leitungen unmittelbar auf den Ausleger nach Art einer Sprossentrasse gelegt werden; möglich ist jedoch auch, ein durchgängiges Trassenelement oberseitig auf dem Ausleger zu befestigen. Sind Kabel und/oder Leitungen verlegt, wird ein Ausleger durchaus mit mehreren Zehnern, ggf. sogar mehreren hundert Kilogramm belastet.

Um einer solchen Belastung standzuhalten, ist in EP 2 808 964 B1 vorgesehen, einen Ausleger mittels einer doppelten Schraubverbindung an einem Hängestiel zu befestigen. Der Hängestiel weist in einem Endabschnitt voneinander in Höhenrichtung voneinander beabstandete Aussparungen auf, die mit Aussparungen an den Wänden des Auslegers, wenn montiert, fluchten. Zum Halten sind Schraubbolzen vorgesehen, die durch jeweils fluchtende Aussparungen des Hängestiels sowie des Auslegers hindurchgeführt sind, sodass ein Reib-Formschluss zwischen Hängestiel und Ausleger bzw. Schraubbolzen gebildet wird.

Nachteilig bei diesem Stand der Technik ist ein recht hoher Montageaufwand aufgrund der Vielzahl an Komponenten. Zudem neigen sowohl die Aussparungen des Hängestiels als auch diejenigen des Auslegers, durch die die Schraubbolzen geführt sind, unter höherer Belastung zum Ausrei-ßen.

Vor diesem Hintergrund ist es Aufgabe der Erfindung, eine verbesserte Befestigung des Auslegers an einem diesen abstützenden bzw. tragenden Teil vorzuschlagen, mit dem nicht nur der Montageaufwand reduziert, sondern auch die Belastbarkeit verbessert werden kann, ohne den Materialbedarf und somit das Gewicht der aus Ausleger und Anschlussstück gebildeten Baugruppe nennenswert erhöhen zu müssen.

Gelöst wird diese Aufgabe mit einer Baugruppe, umfassend einen eingangs genannten, gattungsgemäßen Ausleger sowie ein Anschlussstück mit einem Festlegeabschnitt zum Festlegen an dem Ausleger, wobei das Anschlussstück in zumindest eine Aussparung in einer Wand des Auslegers zum Ausbilden eines kraftübertragenden Formschlusses in Längserstreckungsrichtung des Auslegers mit zumindest einem Riegelelement eingreift, und mit zumindest einem sich an den Festlegeabschnitt in Längserstreckung des Auslegers anschließenden Befestigungsabschnitt zum Anschließen an ein die Baugruppe tragendes Teil.

Vorteilhafte Ausgestaltungen ergeben sich aus den abhängigen Ansprüchen sowie der Beschreibung.

Das Anschlussstück verfügt somit über zumindest zwei in Längserstreckungsrichtung des Auslegers angeordnete Abschnitte: Den Festlegeabschnitt und den Befestigungsabschnitt. Durch das Aufspalten der Funktionalität "Anschließen des Anschlussstücks an ein tragendes Teil" mittels des Befestigungsabschnittes und "Anschluss des Anschlussstückes an den Ausleger" mittels des Festlegeabschnittes können diese Abschnitte unabhängig voneinander optimiert ausgelegt werden. So ist vorgesehen, dass der Festlegeabschnitt formschlüssig in den Ausleger eingreift. Ein Formschluss ist vor allem in Auslegerlängserstreckung notwendig, sodass sich der Ausleger an dem Anschlussstück in Zug- oder Druckrichtung (bezogen auf seine Längserstreckung) abstützen kann. Zusätzlich kann das Anschlussstück den Ausleger auch entgegen der Gewichtskraft abstützen. Erreicht wird der Formschluss durch zumindest ein von dem Festlegeabschnitt abragendes und in eine Wand des Auslegers eingreifendes Riegelelement, vorzugsweise mehrere Riegelelemente.

Der Befestigungsabschnitt kann entsprechend der gewünschten Befestigung an das den Ausleger tragende Teil angepasst werden. Dieses Teil ist typischerweise ein im Wesentlichen senkrechtes Teil, wie etwa ein von einer Decke herunterragender Hängestiel oder eine Wand.

Durch das separate Vorsehen eines Anschlussstückes, getrennt vom Ausleger hat beispielsweise eine für eine sichere Befestigung erforderliche Materialdicke zur Ausbildung des Befestigungsabschnittes keine Auswirkung auf das für den Ausleger genutzte Material. So können im Unterschied zum Stand der Technik, bei dem zum Aufnehmen einer höheren Tragkraft regelmäßig der gesamte Ausleger mit einer dickeren Materialstärke gefertigt werden müsste, nicht nur erhebliche Mengen an Material eingespart werden, sondern auch Befestigungsarten, die eine bestimmte Geometrie oder eine bestimmte Materialdicke benötigen, überhaupt umgesetzt werden.

Durch eine Austauschbarkeit sowohl von Anschlussstücken mit unterschiedlichen Befestigungsabschnitten, als auch von Auslegern für unterschiedliche Applikationen, etwa unterschiedlicher Längen, beide jedoch immer mit dem gleichen Festlegeabschnitt ist die erfindungsgemäße Baugruppe für eine Vielzahl verschiedener Systeme einsetzbar.

Durch diese Ausgestaltung ist auch eine endseitig einseitige Anbindung des Auslegers an ein Tragteil möglich, insbesondere ein Festlegen des Auslegers in Richtung seiner Längserstreckung. Auch wenn eine einseitige Anbindung bevorzugt ist, soll nicht ausgeschlossen sein, dass auch das andere Ende des Auslegers abgestützt ist; typischerweise jedoch nur in Gewichtskraftrichtung. Dann ist der Ausleger nach Art einer Festlager-Loslager-Anordnung fixiert.

Das Riegelelement als Teil des Festlegeabschnitts dient zum Eingreifen in eine komplementäre Aussparung des Auslegers. Typischerweise ist vorgesehen, dass das Riegelelement die Aussparung des Auslegers durchgreift. Dieses Riegelelement kann als Schraubbolzen, eingeschraubt in das Anschlussstück vorgesehen sein. Bevorzugt ist vorgesehen, dass das Riegelelement an das Anschlussstück angeformt ist. Der in Längserstreckung des Auslegers wirkende Formschluss zwischen Festlegeabschnitt und Ausleger wird durch die Aussparung in einer Wand des Auslegers und durch die Stirnfläche des darin eingreifenden Riegelelements bereitgestellt. Dies fördert die Montagefreundlichkeit, da keine zusätzlichen Teile notwendig sind.

Bevorzugt ist vorgesehen, dass das zumindest eine Riegelelement in der Ebene des Festlegeabschnitts von diesem abragt. Auf diese Weise ist die Krafteinleitung zwischen Riegelelement und Festlegeabschnitt bzw. Anschlussstück gradlinig und ohne Verkröpfung.

Das Anschlussstück ist bevorzugt platten- bzw. laschenförmig ausgebildet und kann aus einer Blechplatine hergestellt, respektive ausgestanzt werden. Die Plattenlängserstreckung folgt im montierten Zustand der Längserstreckung des Auslegers.

Möglich ist ferner, dass der Ausleger im Bereich zumindest eines Endabschnittes zumindest zwei einander gegenüberliegende Aussparungen aufweist, in die der Festlegeabschnitt mit gegenüberliegenden, zu den Aussparungen des Auslegers komplementären Riegelelementen eingreift. Durch das Vorsehen eines solchen Riegelelementpaares ist eine beidseitige, typischerweise symmetrische Kraftübertragung, insbesondere bezogen auf den Ausleger, sichergestellt, wodurch ein seitliches Verformen des Auslegers vermieden wird. Durch das Vorsehen der Aussparung des Auslegers in den Endabschnitten ist eine Nähe zu dessen Ende gegeben, sodass vom Riegelelement bis zum Befestigungsabschnitt nur eine kurze Distanz überbrückt werden muss und somit das Anschlussstück insgesamt kurz ausgebildet werden kann.

Es kann vorgesehen sein, dass das zumindest eine Riegelelement an seiner zu dem die Baugruppe tragenden Teil weisenden Seite eine schräge, in Querrichtung einen Hinterschnitt ausbildende Eingreiffläche aufweist, die zu dem Anschlussstück weist und mit der das Riegelelement in die auslegerseitige Aussparung eingreift. Die Eingreiffläche ist typischerweise schräg. Durch das Anstellen der Eingreiffläche, mithin der Kontaktfläche des Riegelelementes, wird ein Hinterschnitt gebildet, dessen Schenkel durch die Eingreiffläche des Riegelelements sowie dem gegenüber dem Riegelelement zurückversetzten Bereich des Festlegeabschnitts gebildet sind. Die Öffnung des kerbförmigen Hinterschnittes weist in Längserstreckungsrichtung des Auslegers. Bei dem an dem Ausleger montierten Anschlussstück führt eine Belastung desselben in Richtung der Längserstreckung des Auslegers, welche Belastungsrichtung entgegengesetzt der Öffnungsrichtung des Hinterschnittes ist, dazu, dass das Riegelelement mit der die Aussparung aufweisenden Wand auch in Querrichtung des Auslegers formschlüssig angeschlossen ist. Typischerweise ist die Eingreiffläche Teil der Stirnfläche des Anschlussstücks.

Dies ist beispielsweise dann von Vorteil, wenn das Anschlussstück mit seinem Riegelelement in eine Aussparung im oberen Bereich des Auslegers eingreift und sich der Ausleger mit seinem unteren Bereich an dem den Ausleger tragenden Teil abstützt. Dann wirkt bei Belastung des Auslegers in Gewichtskraftrichtung auf die Verbindung Riegelelement-Aussparung eine Zugkraft in Längserstreckungsrichtung des Auslegers, sodass der Randbereich der Aussparung des Auslegers in den Hinterschnitt hineingezogen wird. Damit ist ein selbstsicherndes System unter Belastung bereitgestellt.

Besonders vorteilhaft ist, wenn zwei einander bezüglich der Längserstreckung des Auslegers gegenüberliegende Riegelelemente jeweils eine solche, vorstehend beschriebene schräge Eingreiffläche aufweisen. So wird der Bereich des Auslegers, in den das Riegelelementpaar eingreift, durch das Anschlussstück unter Last zusätzlich zusammengehalten.

Insbesondere, wenn das Anschlussstück innerhalb des Auslegers angeordnet ist, sodass die Riegelelemente von innen nach außen weisend in die Aussparungen eingreifen, wird der Ausleger zusätzlich durch den Festlegeabschnitt stabilisiert.

In einer möglichen Ausgestaltung ist vorgesehen, dass das zumindest eine Riegelelement zusätzlich oder auch unabhängig von der vorstehend beschriebenen Ausgestaltung an seiner von dem die Baugruppe tragenden Teil wegweisenden Seite in Querrichtung einen Hinterschnitt bildende, schräge Eingreiffläche, typischerweise ebenfalls die Stirnfläche des Festlegeabschnitts, aufweist, die zu dem Anschlussstück weist. Erreicht werden hierdurch die gleichen Vorteile wie vorstehend betreffend die schräge Eingreiffläche, die zu dem die Baugruppe tragenden Teil weist, mit der Maßgabe, dass diese für eine Druckbelastung in Auslegerlängserstreckungsrichtung gelten.

Weist das zumindest eine Riegelelemente beidseitig schräge Eingreifflächen auf, sodass das Riegelelement schwalbenschwanzartig ausgebildet ist, ist zudem eine Wendbarkeit des Anschlussstücks gegeben, sodass ein vorgesehener Befestigungsabschnitt unterschiedlich eingesetzt werden kann.

Möglich ist eine Ausgestaltung, bei der das zumindest eine Riegelelement des Anschlussstücks in Dickenrichtung eine Vertiefung aufweist. Diese Vertiefung, die beispielsweise als Prägung ausgeführt ist, weist mit ihrer Öffnung entgegen der Gewichtskraftrichtung und dient zur Aufnahme eines in Hochrichtung einer Aussparung des Auslegers einfassenden Randbereichs. Auch auf diese Weise ist dann zwischen Riegelelement des Anschlussstückes und dem Ausleger ein in Querrichtung wirkender Formschluss gebildet. Durch die Vertiefung wird eine ähnliche Sicherungsfunktion bewirkt, wie sie vorstehend beschrieben ist: Unter Belastung des Auslegers in Gewichtskraftrichtung ist die Verbindung Riegelelement-Ausleger selbstsichernd.

Die Vertiefung kann etwa durch eine Prägung oder einen Stauchvorgang des Riegelelementes gebildet werden. Hierdurch wird das Riegelelement zusätzlich kaltverfestigt. In einer anderen Ausgestaltung kann vorgesehen sein, eine runde Vertiefung mit einer geringen Kerbwirkung mittels spanender Bearbeitung, beispielsweise Fräsen, einzubringen.

In einer möglichen Ausgestaltung ist vorgesehen, dass der Ausleger im benachbart zu zumindest einer Aussparung in Richtung zu dem distalen Ende des Auslegers hin zumindest eine materialversteifende Prägung aufweist. Die Prägung ist somit im Randbereich einer Aussparung für den Eingriff eines Riegelelementes des Anschlussstücks vorgesehen. Die Prägung ist typischerweise in Auslegerlängserstreckung ausgerichtet und ist bevorzugt auf gleicher Höhe wie die Aussparung. Durch die durch die Prägung eingebrachte Kaltverfestigung ist die Materialbelastbarkeit vergrößert und die in die Verbindung Riegelelement-Aussparung eingebrachte Kraft wird in die Wand des Auslegers verteilt eingekoppelt. Einem Ausreißen der Aussparung ist somit wirksam entgegengewirkt.

So kann auch vorgesehen sein, dass das Riegelelement eine größere Materialstärke aufweist, als das übrige Anschlussstück. Hierdurch kann die Kontaktfläche zwischen Aussparung und Riegelelement materialschonend vergrößert werden, so dass die Flächenpressung im Kontakt geringer wird.

In einer Weiterbildung ist vorgesehen, dass der Ausleger an zwei gegenüberliegenden Wänden zumindest zwei Aussparungen aufweist und das Anschlussstück in seinem Festlegeabschnitt zumindest zwei zu den Aussparungen komplementäre Riegelelemente aufweist. Die in den Ausleger eingekoppelte Kraft seitens des Anschlussstückes wird durch die Mehrzahl der Riegelelement-Aussparungsverbindungen verteilt eingekoppelt, sodass die Flächenpressung auf den jeweiligen Randbereich einer Aussparung in den einzelnen Verbindungen reduziert wird. Hierdurch wird einem plastischen Verformen der Verbindungspartner entgegengewirkt. In diesem Zusammenhang ist insbesondere vorgesehen, dass die Aussparungen einer Wand jeweils auf gleicher Höhe sind. Sind Verprägungen vorgesehen, können diese sich auch zwischen den einzelnen Aussparungen, typischerweise in Längserstreckungsrichtung des Auslegers, erstrecken.

Es kann vorgesehen sein, dass der Festlegeabschnitt symmetrisch zur Mittellängsachse des Auslegers ausgebildet ist. Dann sind typischerweise auch die gegenüberliegenden Aussparungen des Auslegers symmetrisch zur Mittellängsachse ausgebildet. Dies verbessert die Kraftübertragung zwischen Festlegeabschnitt und Ausleger und erlaubt eine Wendbarkeit des Anschlussstückes.

Es kann vorgesehen sein, dass der Befestigungsabschnitt nach Art eines Hammerkopfes ausgebildet ist, der in eine in das die Baugruppe tragende Teil eingebrachte, längliche Aussparung einbringbar und darin fixierbar ist. Ein nach Art eines T-Stücks ausgebildeter Hammerkopf wird gebildet durch einen den Kopf bildenden Quersteg sowie einem Steg, der den Kopf mit dem Festlegeabschnitt verbindet. Ist der Hammerkopf an einem Tragteil montiert, hintergreift der Kopf eine Aussparung in diesem; der Steg durchgreift dann die Aussparung. Die Längserstreckung der Aussparung in dem die Baugruppe tragenden Teil ist winklig gegenüber der Längserstreckung des Kopfes des Hammerkopfes, wenn montiert, angeordnet: Typischerweise ist die Aussparung in Hochrichtung ausgerichtet, der Hammerkopf in Querrichtung dazu. Zur Montage wird der Kopf des Hammerkopfes hochkant durch die Aussparung geführt, um 90° gekippt und hintergreift so mit seinem Kopf den die Aussparung umgebenden Bereich.

Bevorzugt ist vorgesehen, dass der Hammerkopf in der gleichen Ebene wie der Festlegeabschnitt angeordnet ist. Auf diese Weise kann das gesamte Anschlussstück aus einer ebenen Blechplatine hergestellt werden; das Material ist frei von Umformrissen oder etwaiger Kerben in Längserstreckung. Dies ist optimal für eine Zug- bzw. Druckkraftübertragung.

Zur Verbesserung der Festigkeit des Befestigungsabschnittes kann vorgesehen sein, dass im Bereich des den Kopf des Hammerkopfes mit dem Festlegeabschnitt verbindenden Steges zumindest eine versteifende Prägung vorgesehen ist. Eine solche Prägung kann sich entlang der Konturen des Hammerkopfes erstrecken. Typischerweise ist sie insgesamt in einer T-Form ausgeprägt und erstreckt sich von dem Festlegeabschnitt in den Befestigungsabschnitt respektive dem Kopf des Hammerkopfes.

In einer möglichen Ausgestaltung ist vorgesehen, dass das Anschlussstück über zumindest einen, zu dem Kopf des Hammerkopfes weisenden Stützvorsprung verfügt, der zu dem Kopf des Hammerkopfes einen solchen Abstand aufweist, dass das Anschlussstück in die Aussparung des die Baugruppe tragenden Teils einbringbar ist und, wenn in der Aussparung befestigt, außenseitig an dem die Baugruppe tragenden Teil abgestützt ist. Die zu dem die Baugruppe tragenden Teil weisenden Stützvorsprünge, die typischerweise als Stege ausgebildet sind, liegen mit ihrer Stirnfläche an der Außenseite des die Baugruppe tragenden Teils an. Ein Einbringen des Hammerkopfes in die Aussparung wird hierdurch nicht verhindert; auch das notwendige Kippen des Anschlussstückes, damit der Hammerkopf das tragende Bauteil hintergreift, wird nicht behindert. Dies insbesondere deshalb, da aufgrund einer kleinen Abstützfläche der Stützvorsprünge die Reibung, wenn vorhanden, minimiert ist und auch ein Verkanten verhindert ist. Durch das Abstützen des Anschlussstückes kann der Festlegeabschnitt im Wesentlichen rechtwinklig oder vorgespannt mit leichter Steigung entgegen der Schwerkraftrichtung von dem die Baugruppe tragenden Teil abstehen, sodass eine Montage eines Auslegers zur Ausbildung einer erfindungsgemäßen Baugruppe vereinfacht wird.

Es kann vorgesehen sein, dass der Befestigungsabschnitt gegenüber dem Festlegeabschnitt abgewinkelt ist. Der Befestigungsabschnitt kann dann an das die Baugruppe tragende Teil angepasste Anschlusskomponenten aufweisen. Auch der Vorteil, dass der Befestigungsabschnitt gegenüber dem Festlegeabschnitt abgewinkelt ausgeführt sein kann, ist durch die Funktionstrennung des Festlegens des Auslegers und dem Befestigen des Anschlussstücks gegeben.

Zum Aussteifen des Übergangs zwischen Befestigungs- und Festlegeabschnitt kann eine sich in Längserstreckungsrichtung des Anschlussstücks erstreckende Prägung vorgesehen sein, sodass ein Aufbiegen der Verbindung vermieden wird. Auch das Einformen einer Profilierung durch Tiefziehen ist denkbar.

Bevorzugt ist vorgesehen, dass der Befestigungsabschnitt über eine Aussparung verfügt, durch die ein Befestiger, etwa ein Bolzen hindurchführbar ist und mit dem das Anschlussstück an dem die Baugruppe tragenden Teil anbindbar ist. Insbesondere, wenn der Befestigungsabschnitt gegenüber dem Festlegeabschnitt abgewinkelt ist, kann ein Befestiger, etwa eine Schraube, durch diese Aussparung hindurchgreifen und so das Anschlussstück an dem die Baugruppe tragenden Teil befestigen. Die Schraube kann dann vorteilhaft nur auf Zug bzw. Druck belastet werden.

Bevorzugt ist diese Aussparung eckig gestaltet, beispielsweise viereckig oder sechseckig. Auf diese Weise kann nicht nur ein Bolzen hindurchgeführt, sondern dieser auch im Bereich seines Kopfes in einem ersten Abschnitt ebenfalls eckig ausgebildet und formschlüssig in die Aussparung eingepasst sein und in einem zweiten Abschnitt die Aussparung überdecken, sodass dieser gegenüber einem Verdrehen gesichert ist.

Die multiplen Anwendungsmöglichkeiten können dadurch weitergebildet werden, wenn das Anschlussstück an gegenüberliegenden Enden des Festlegeabschnittes über jeweils zumindest einen Befestigungsabschnitt verfügt. Durch die längliche Erstreckung des Festlegeabschnittes sind die beiden Befestigungsabschnitte an den jeweiligen Enden des Festlegeabschnittes gegenüber angeordnet. Ist das Anschlussstück wendbar (beispielsweise indem der Festlegeabschnitt punkt- und/oder spiegelsymmetrisch gegenüber der Mittellängsachse und/oder der Querachse des Auslegers ausgebildet ist), kann je nach Bedarfsfall das Anschlussstück an dem Ausleger montiert und anschließend an dem die Baugruppe tragenden Teil befestigt werden.

Insbesondere ist vorgesehen, dass an der einen Seite ein abgewinkelter Befestigungsabschnitt mit einer Aussparung und an der anderen Seite ein Befestigungsabschnitt nach Art eines Hammerkopfes vorgesehen ist. Auf diese Weise wird eine Vielzahl an möglichen Einsatzszenarien mit ein und demselben Bauteil abgedeckt.

In einer Weiterbildung ist vorgesehen, dass der Festlegeabschnitt über eine Aussparung verfügt, durch die ein Bolzen hindurchführbar und mit dem das Anschlussstück an einer Befestigung anbindbar ist. Die Aussparung kann insbesondere in Form eines Langloches zum Ausgleichen von Toleranzen ausgebildet sein. Durch diese Aussparung kann beispielsweise ein Bolzen, etwa eine von einer Decke herunterragende Gewindestange, hindurchführbar und mit einer Mutter gegengesichert werden. Auf der Mutter kann der Festlegeabschnitt aufliegen. Der Ausleger kann auf diese Weise auch nach Art einer Leitersprosse an zwei Seiten befestigt sein: auf beiden Seiten hängend oder eine Seite hängend, die andere Seite an einem senkrechten Teil befestigt. So kann die Tragkraft des Auslegers erhöht werden, wobei immer gleiche Teile (Ausleger zuzüglich zwei Anschlussstücke) vorgesehen sein können.

In einer besonders vorteilhaften Ausgestaltung ist vorgesehen, dass das Anschlussstück eine größere Materialstärke aufweist als der Ausleger. Auf diese Weise kann allein das Anschlussstück an die unter Umständen aufzunehmenden hohen Kräfte, typischerweise Zugkräfte, angepasst sein, während der Ausleger selbst aus einem Material deutlich geringerer Materialstärke hergestellt werden kann. Selbiges lässt sich auch erreichen, wenn das Anschlussstück aus einem gegenüber dem Material des Auslegers festeren und damit belastbareren Material hergestellt ist. In aller Regel entspricht die Materialstärke des Riegelelementes der Höhe der Eingreiffläche und ist damit proportional zur Kontaktfläche des Riegelelementes gegenüber der Aussparung des Auslegers. Typischerweise ist die Materialstärke des Anschlussstücks mindestens doppelt oder mindestens etwa dreimal so groß wie diejenige des Auslegers. Auf diese Weise kann unabhängig von der Materialstärke des Auslegers die Flächenpressung in der Verbindung Riegelelement-Aussparung beeinflusst werden. Zudem wird in Summe der Baugruppe wesentlich weniger Material als im Stand der Technik benötigt, da die für eine Anbindung an einem die Baugruppe tragenden Teil benötigte Materialstärke nur das Anschlussstück betrifft und nicht den gesamten Ausleger.

Bevorzugt ist vorgesehen, dass der Ausleger als offenes Profil ausgebildet ist. Dann kann das Anschlussstück innerhalb des Profils angeordnet sein. Insbesondere können die elastischen Eigenschaften eines solchen Profils genutzt werden, um werkzeuglos das Anschlussstück an dem Ausleger montieren zu können. Typischerweise ist das Profil als umgeformtes/abgekantetes Blechprofil oder als Strangpressprofil - vorzugsweise symmetrisch - ausgebildet. Denkbar ist, dass es in seinem Querschnitt über mehrere Kammern verfügt. Ein offenes Profil ist gegenüber einer Biegebelastung äußerst stabil bei gleichzeitig geringem Materialeinsatz.

In einer Weiterbildung einer solchen Ausgestaltung kann vorgesehen sein, dass die Öffnung des Profils, wenn der Ausleger nur mit einem Endabschnitt an dem die Baugruppe tragenden Teil angebunden ist, entgegen der Gewichtskraftrichtung weist. Somit weist die Öffnung des Profils, wenn montiert, nach oben, während der geschlossene Teil nach unten weist. Diese Ausgestaltung ist äußerst biegerobust, da in dem oberen Teil aus dem Biegemoment resultierende Zugkräfte wirken, die auch durch die freien Enden eines offenen Profils übertragen werden. Ausknicken würde ein solcher Ausleger, wenn im unteren, gestauchten Bereich, weil druckbeaufschlagt, freie Enden vorgesehen wären. Diese Knickneigung ist durch die nach unten weisende geschlossene Seite des Profils vermieden.

Um oberseitig auf dem Ausleger Kabel oder Leitungen oder ein durchgängiges Kabeltrassenelement zu befestigen, kann zumindest ein an dem Ausleger festlegbares Befestigungselement dienen, das beispielsweise in Form einer Klammer zumindest eine Aussparung in zumindest einer Wand des Auslegers eingreift.

Verfügt das Profil über einen Rücken sowie daran angeformte Seitenwände in Form von Schenkeln kann vorgesehen sein, dass der Festlegeabschnitt des Anschlussstücks mit seinem zumindest einen Riegelelement in zumindest eine Seitenwand eingreift. Die Seitenwände halten einem auf den Ausleger aufgebrachtes Biegemoment das größte Widerstandsmoment entgegen und setzen dies in Bezug auf das Anschlussstück in eine in Längserstreckung des Auslegers gerichtete Zug/Druckkraft um. Diese Zug-/Drucckraft wird durch diese Ausgestaltung unmittelbar von den Seitenwänden ausgehend in das Anschlussstück eingeleitet. Auf diese Weise ist eine besonders direkte Kraftübertragung ermöglicht.

In einer Weiterbildung ist vorgesehen, dass der Festlegeabschnitt in den von dem Rücken des Profils wegweisenden Endabschnitt der Seitenwand eingreift. Wenn montiert, ist dies daher der obere Bereich. So werden in das Anschlussstück bei einer Belastung des Auslegers vornehmlich Kräfte und keine Biegemomente eingeleitet. Im Bereich des Rückens stützt sich der Ausleger mit seinem Endabschnitt in dieser Ausgestaltung an dem die Baugruppe tragenden Bauteil ab.

Hierzu ist bevorzugt vorgesehen, dass der Bereich des Auslegers, mit dem der Ausleger mit Abstand zu dem Anschlussstück an dem die Baugruppe tragenden Teil abgestützt ist, zumindest eine materialversteifende Prägung aufweist. Durch die Materialverfestigung im Abstützbereich gegenüber dem die Baugruppe tragenden Bauteil wird einer etwaigen plastischen Verformung bei höheren Belastungen des Auslegers entgegengewirkt. Die durch das Abstützen lokal in den Endabschnitt eingeleitete Kraft, die typischerweise eine auf einer Kante des Rücken lastenden Linienlast ist, wird so gleichmäßig in das Material verteilt. Da die Abstützkräfte insbesondere von den Seitenwänden - den Schenkeln - übertragen wird, ist die zumindest eine Prägung bevorzugt in einer Seitenwand vorgesehen.

In einer möglichen Ausgestaltung ist vorgesehen, dass die Seitenwände zur Ausbildung eines C-Profils über zueinander abgewinkelte, der Längserstreckung des Auslegers folgende Fortsätze verfügen. Auf diese Weise sind die Seitenwände des Auslegers bei einer Belastung betreffend die Zugkräfte entlastet. Zudem können die Fortsätze für etwaige, die Fortsätze untergreifende Halterungen oder Klammern zum oberseitigen Halten einer Kabeltrasse genutzt werden.

Ist der Querschnitt des Auslegerprofils trapezförmig, sodass sein Rücken weniger weit ist als die dem Rücken gegenüberliegende Weite, kann hierdurch nicht nur Material eingespart, sondern eingebrachte Klammern können in der zwischen Seitenwand und Fortsatz gebildeten Kerbe vorteilhaft gehalten werden. Dies erleichtert die Montage.

Es kann vorgesehen sein, dass, wenn der Befestigungsabschnitt gegenüber dem Festlegeabschnitt abgewinkelt ist, das Anschlussstück dergestalt in den Ausleger eingesetzt ist, dass der Befestigungsabschnitt in die Öffnungsrichtung des Profils weist. Auf diese Weise wird der Abstand zwischen Zuganbindung mittels des Anschlussstücks und druckbeaufschlagtem Abstützbereich des Auslegers maximiert, sodass die jeweiligen in den Verbindungen wirkenden Kräfte aufgrund des Hebels minimiert werden.

Bevorzugt ist vorgesehen, dass das Anschlussstück und der Ausleger aus einem Metall, insbesondere Stahlblech hergestellt sind. Aufgrund der Einstückigkeit des Auslegers kann als Ausgangsmaterial vorteilhafterweise nicht nur tauchfeuerverzinktes, sondern auch bandverzinktes Material sein, da zur Herstellung der erfindungsgemäßen Baugruppe nur Stanz- und Umformprozesse benötigt werden. Auch Edelstähle sind denkbar. Hierdurch kann auch ein elektrischer Kontakt zwischen Ausleger und die Baugruppe tragenden Bauteil gegeben sein.

Ausgeschlossen ist jedoch nicht, dass es vorteilhaft sein kann, wenn Anschlussstück und Ausleger aus unterschiedlichen Materialien gefertigt sind. Insbesondere mit Blick auf eine etwaig gewünschte galvanische Trennung zwischen Ausleger und tragendem Bauteil kann dies von Vorteil sein.

Die Erfindung wird anhand eines Ausführungsbeispiels der beiliegenden Figuren näher erläutert. Es zeigen:
- **Fig. 1:**: Ein Kabeltragsystem mit einer einen Ausleger und ein Anschlussstück bildenden Baugruppe, das an einen Hängestiel angeschlossen ist,
- **Fig. 2:**: das Anschlussstück der Baugruppe in einer perspektivischen Alleindarstellung,
- **Fig. 3:**: der Ausleger in einer perspektivischen Alleindarstellung,
- **Fig. 4:**: eine vergrößerte Detaildarstellung der Baugruppe mit dem in den Ausleger eingesetzten Anschlussstück,
- **Fig. 5:**: der durch das Anschlussstück an den Hängestiel als die Baugruppe tragendes Teil angeschlossene Ausleger in einer Längsschnittansicht,
- **Fig. 6:**: der vorbeschriebene Ausleger mit dem darin in einer anderen Raumlage eingesetzten Anschlussstück und
- **Fig. 7:**: die Baugruppe, an deren Ausleger ein Kabeltrassenelement befestigt ist.

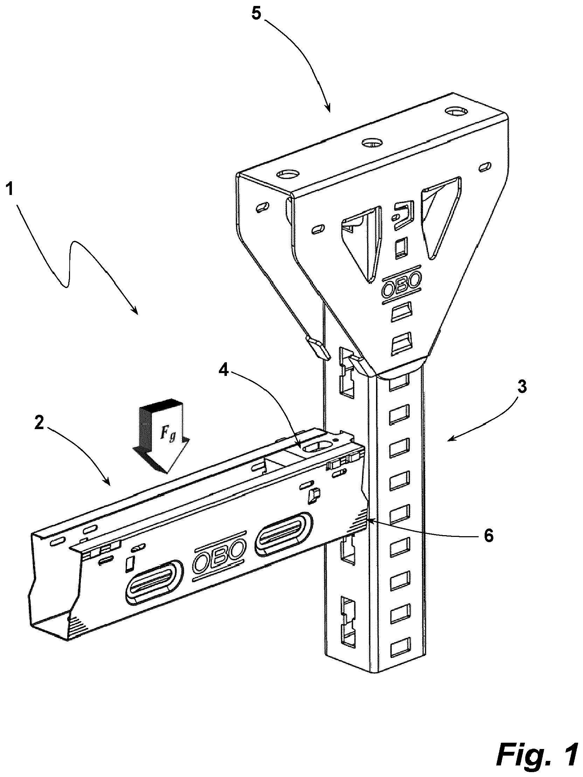

Figur 1 zeigt ein Kabeltragsystem 1. Das Kabeltragsystem 1 umfasst eine Baugruppe, gebildet durch einen Ausleger 2 sowie ein den Ausleger 2 und ein die Baugruppe tragendes Teil 3 verbindendes Anschlussstück 4. Das die Baugruppe tragende Teil 3 ist in der Darstellung der Figur 1 beispielhaft als herabragender Hängestiel ausgeführt, der an einem an einer nicht dargestellten Decke angeschlossenen Kopfstück 5 befestigt ist.

Das Anschlussstück 4 ist an einen Endabschnitt des Auslegers 2 in dessen oberen Bereich angebunden. Wirkt eine Gewichtskraft F_{g} auf den Ausleger 2, stützt sich der Ausleger 2 aufgrund des eingebrachten Biegemomentes mit seinem dem Anschlussstück 4 gegenüberliegenden, mit sich in Längserstreckungsrichtung des Auslegers 2 erstreckenden, linienförmigen Prägungen versehenen Bereich 6 an dem die Baugruppe tragenden Teil 3 ab. Bei dem dargestellten Ausführungsbeispiel ist die gesamte untere Stirnfläche des Auslegers 2 an dem Tragteil 3 abgestützt. Auf das Anschlussstück 4 wirkt dann die aus der vorbeschriebenen Abstützanordnung resultierende Zugkraft in Längserstreckungsrichtung des Auslegers 2 sowie die Gewichtskraft F_{g}.

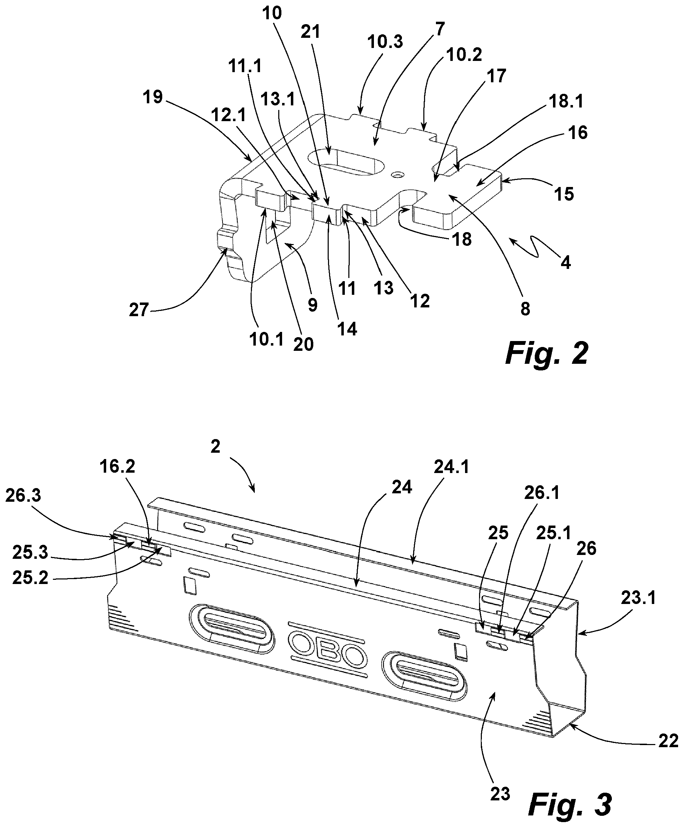

Figur 2 zeigt das Anschlussstück 4 in einer isolierten Ansicht. Das Anschlussstück 4 umfasst einen flächigen Festlegeabschnitt 7 sowie zwei daran gegenüberliegend angeschlossene, der Längserstreckung des Anschlussstücks 4 folgende Befestigungsabschnitte 8, 9. Im Bereich des Festlegeabschnittes 7 umfasst das Anschlussstück 4 vier Riegelelemente 10, 10.1, 10.2, 10.3. Diese befinden sich in der gleichen Ebene wie der Festlegeabschnitt 7 und sind an diesen nach außen in Querrichtung zur Längserstreckung des Auslegers 2 angeformt.

Die Außenkontur der Riegelelemente 10, 10.1, 10.2, 10.3 ist schwalbenschwanzförmig. Nachstehend ist die Kontur beispielhaft für ein Riegelelement 10 erläutert; diese Ausführungen gelten für die weiteren Riegelelemente 10.1, 10.2, 10.3 gleichermaßen. Die in Längserstreckungsrichtung des Festlegeabschnittes 7 weisenden Eingreifflächen 11, 11.1 sind gegenüber dem zurückversetzten Teil 12, 12.1 geneigt, sodass sich jeweils eine V-förmige Kerbe 13, 13.1 als in Querrichtung wirkender Hinterschnitt im Übergang zwischen Eingreiffläche 11, 11.1 und sich daran anschließendem zurückversetzten Teil 12, 12.1 ausbildet. Der Abstand der beiden einer Verriegelung dienenden Kerben 13, 13.1 zueinander ist kleiner als die Weite der von dem Anschlussstück 4 wegweisenden Stirnfläche 14 des Riegelelementes 10.

Der Längserstreckung des Festlegeabschnittes 7 folgend, sind die beiden Befestigungsabschnitte 8, 9 an den gegenüberliegenden Enden angeordnet.

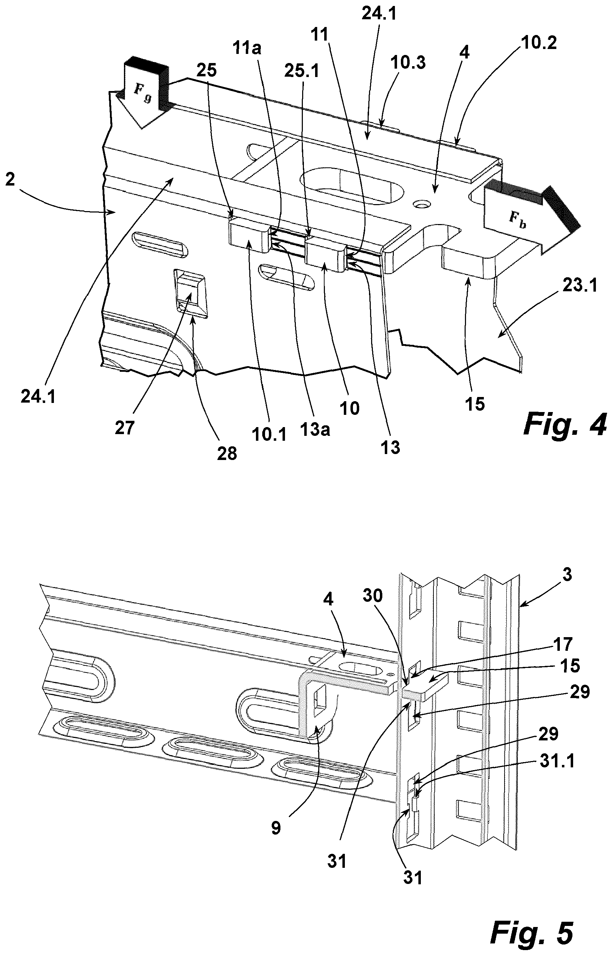

Ein erster Befestigungsabschnitt 8 ist nach Art eines Hammerkopfes 15 ausgebildet. Der Hammerkopf 15 umfasst einen Kopf 16 sowie einen Steg 17, mit dem der Kopf 16 an den Festlegeabschnitt 7 angeschlossen ist. Der Hammerkopf 15 weist zwei, zu dem Festlegeabschnitt 7 weisende Stirnflächen 18, 18.1 auf. Mit diesen ist der Kopf 16 an den die Baugruppe tragenden Teil 3 abgestützt (siehe Figur 5), wenn dieser eine den Befestigungsabschnitt 8 tragenden längliche Aussparung des die Baugruppe tragenden Teils 3 hintergreift.

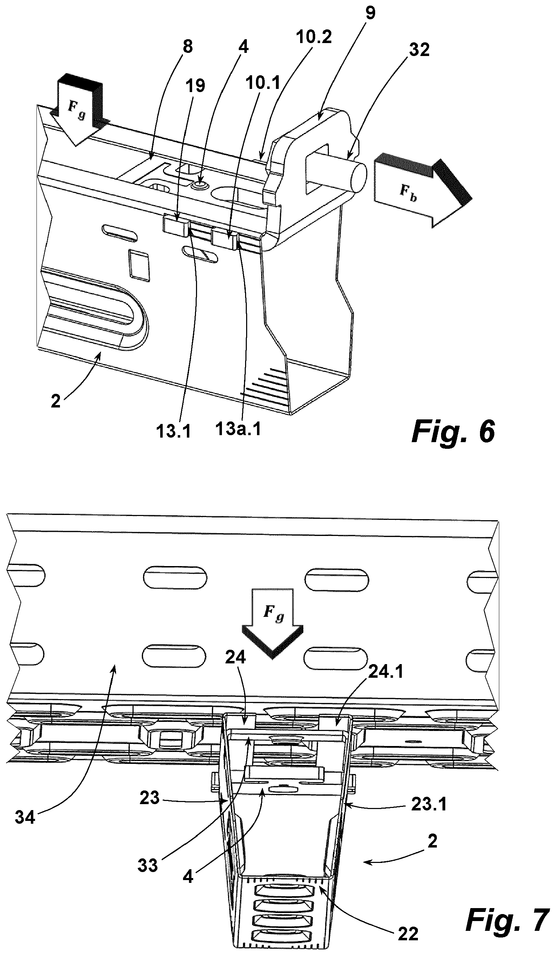

Dem ersten Befestigungsabschnitt 8 gegenüberliegend ist ein zweiter Befestigungsabschnitt 9 angeordnet. Dieser ist gegenüber dem Festlegeabschnitt 7 an einer Biegekante 19 um einen Winkel gegenüber dem Festlegeabschnitt 7 abgewinkelt. Der Winkel beträgt in diesem Ausführungsbeispiel etwa 90°. Der Befestigungsabschnitt 9 umfasst eine Aussparung 20, durch die eine nicht näher dargestellte Schraube hindurchführbar ist, um das Anschlussstück 4 beispielsweise an einer Wand zu befestigen (siehe Figur 6).

Im Festlegeabschnitt 7 ist eine weitere Aussparung 21 vorgesehen, durch die ebenfalls ein nicht näher dargestellter Befestiger, beispielsweise ein Bolzen hindurchführbar ist. Hierdurch kann das Anschlussstück 4 beispielsweise an einer von einer Decke herabhängenden Gewindestange befestigt werden.

Figur 3 zeigt den Ausleger 2 der Baugruppe. Der Ausleger 2 ist als in vertikaler Richtung nach oben offenes, der Längserstreckung des Auslegers 2 folgendes Profil ausgebildet. Dieses umfasst einen Rücken 22 sowie daran seitlich angeschlossene und in dieselbe Richtung abragende Seitenwände 23, 23.1 in Form von Schenkeln. An den freien Enden der Seitenwände 23, 23.1 sind zueinander weisende Fortsätze 24, 24.1 abgekantet, die die Biegesteifigkeit der Seitenwände 23, 23.1 erhöhen.

In die Seitenwände 23, 23.1 sind symmetrisch bezüglich der Mittellängsachse des Auslegers 2 im Bereich seiner beiden Enden jeweils gegenüberliegende Aussparungen 25, 25.1, 25.2, 25.3 vorgesehen (die hinteren Aussparungen sind durch den Fortsatz 24.1 in Figur 3 verdeckt). Diese sind unmittelbar unterhalb der abgekanteten Fortsätze 24, 24.1 in den Ausleger 2 eingebracht; sie sind in dem von dem Rücken 22 wegweisenden Endabschnitt der Seitenwände 23, 23.1 angeordnet. In diese Aussparungen 25, 25.1, 25.2, 25.3 greifen, wenn das Anschlussstück 4 an dem Ausleger 2 montiert ist, die Riegelelemente 10, 10.1, 10.2, 10.3 ein (siehe Figur 4). Zwischen den jeweils benachbarten Aussparungen 25, 25.1; 25.2, 25.3 eines Endes sowie zu den freien Enden des Auslegers 2 weisend, sind linienförmige Prägungen 26, 26.1, 26.2, 26.3 vorgesehen, durch die diese Bereiche kaltverfestigt sind. Hierdurch können größere Kräfte über die Riegelelemente 10, 10.1, 10.2, 10.3 in die Aussparungen 25, 25.1, 25.2, 25.3 einfassenden Abschnitte der jeweiligen Seitenwand 23, 23.1 eingeleitet werden. Zudem verteilt sich eine in die Aussparungen 25, 25.1, 25.2, 25.3 eingebrachte Zugkraft in Richtung der Längserstreckung des Auslegers 2 besser in den Seitenwänden 23, 23.1 des Auslegers 2, was ebenfalls einem Ausreißen entgegenwirkt.

Weitere Prägungen oder Aussparungen können vorgesehen sein. Diese können zum Befestigen zusätzlicher, nicht näher dargestellter Elemente, zur Aussteifung des Auslegers 2 oder der Materialeinsparung und damit Gewichtsreduktion dienen.

Figur 4 zeigt einen Ausschnitt der Baugruppe auf die Stirnseite des Auslegers 2 mit dem eingesetzten Anschlussstück 4. Die Riegelelemente 10, 10.1, 10.2, 10.3 greifen in die gegenüberliegenden Aussparungen 25, 25.1 des Auslegers 2 ein.

Auf den Ausleger 2 wirkt im Belastungsfall eine Gewichtskraft F_{g}, die aufgrund der endseitig einseitigen Anbindung des Auslegers 2 in ein Biegemoment gewandelt wird. Da sich, wie in Figur 1 zu erkennen, der Ausleger 2 an dem dem Anschlussstück 4 in vertikaler Richtung gegenüberliegenden Abschnitt 6 an dem die Baugruppe tragenden Teil 3 abstützt, wirkt auf das Anschlussstück 4 eine aus dem Biegemoment resultierende Befestigungskraft F_{b} als Zugkraft. Die Richtungen der beiden Kräfte F_{g}, F_{b} sind in Figur 4 durch Blockpfeile kenntlich gemacht. Durch die in Längserstreckung des Auslegers 2 wirkende Zugkraft F_{b} werden die die Aussparungen 25, 25.1 umgebenden Bereiche aufgrund der schrägen Eingreifflächen 11, 11a in die einer Seitenwandverriegelung in Querrichtung dienenden, als Hinterschnitte ausgebildeten Kerben 13, 13a gezogen. Durch die auf den nach oben weisenden Abschluss des Auslegers 2 wirkende Zugkraft ist wirksam verhindert, dass das C-förmige Profil des Auslegers 2 an seiner dem Rücken 22 gegenüberliegenden Seite selbst unter höheren Belastungen aufklappt.

Um die Flächenpressung im Bereich der Anbindung der Riegelelemente 10, 10.1, 10.2, 10.3 zu der Aussparung 25, 25.1 möglichst gering zu halten, weist das Anschlussstück 4 eine deutlich höhere Materialstärke auf als das Profil des Auslegers 2. Die Materialstärke des Anschlussstücks 4 ist für die Höhe des Linienkontaktes zwischen Riegelelement 10, 10.1, 10.2, 10.3 und Aussparung 25, 25.1 ausschlaggebend.

Zur Montage des Anschlussstücks 4 in dem Ausleger 2 wird dieses zunächst mit seinen Riegelelementen 10.2, 10.3 der einen Seite in die Nähe der dazugehörigen, in der Figur durch den Fortsatz 24.1 verdeckten Aussparungen gebracht (etwa anliegend an dem oberen Fortsatz 24.1 der Seitenwand 23.1). Dann stützt sich der abgewinkelte Befestigungsabschnitt 9 an den Seitenwänden 23, 23.1 ab, während das Anschlussstück 4 um eine Achse parallel zur Längserstreckung des Anschlussstücks 4 gekippt wird, wodurch die beiden Seitenwände 23, 23.1 gespreizt werden, bis die Riegelelemente 10, 10.1 der anderen Seite in die entsprechenden Aussparungen 25, 25.1 des Auslegers 2 einspringen. Um diesen Vorgang zu unterstützen, weist der zweite Befestigungsabschnitt 9 beidseitig Spreiznasen 27 auf, die, wenn das Anschlussstück 4 in dem Ausleger 2 montiert ist, in entsprechende Aussparungen 28 das Auslegers 2 eingreifen. Es kann vorgesehen sein, dass die Spreiznasen 27 an dem die Aussparungen 28 umgebenden Bereich formschlüssig in Längserstreckungsrichtung des Auslegers 2 anliegen, sodass auch hier unter Zugbelastung ein Formschluss entsteht.

Eine so bereitgestellte Baugruppe kann, wie Figur 5 zeigt, an einem die Baugruppe tragenden Teil 3, hier einem Hängestiel, montiert werden. Hierzu hintergreift der Hammerkopf 15 des Anschlussstücks 4 eine längliche Aussparung 29 und liegt somit an dem die Aussparung 29 umgebenden Bereich 30 an. Damit ist ein Formschluss zwischen dem Hammerkopf 15 und dem die Baugruppe tragenden Teil 3 - hier: Dem Hängestiel - gebildet. Die Aussparung 29 ist rechteckförmig ausgeführt und verfügt im Bereich der Mitte ihrer vertikalen Begrenzung über nach innen vorspringende Abstützstege 31, 31.1. Durch die Abstützstege 31, 31.1 und die untere Begrenzung der Aussparung 29 besteht die Möglichkeit, das Anschlussstück 4 in zwei unterschiedlichen Höhen in jeder Ausnehmung 29 anzubringen. In Gewichtskraftrichtung F_{g} liegt der Steg 17 des Hammerkopfes 15 somit entweder auf der Oberseite der beiden Stege 31, 31.1 oder der unteren Begrenzung der Aussparung 29 auf.

Zu der länglichen Aussparung 29, in die der Hammerkopf 15 eingesetzt ist, analoge längliche Aussparung 29.1 sowie die dazugehörigen Abstützstege 31.1, 31.2 sind in der Figur zudem in einem ungenutzten Abschnitt gekennzeichnet.

Figur 6 zeigt das Anschlussstück 4 sowie den Ausleger 2 in einer anderen Konfiguration zueinander: Bei dieser Konstellation ist das Anschlussstück 4 gegenüber der zuvor beschriebenen Konfiguration gewendet, sodass der andere Befestigungsabschnitt 9 zur Anbindung, beispielsweise an einer nicht näher dargestellten Wand als das die Baugruppe tragende Teil mittels eines Bolzens 32, hier als Schraube ausgeführt, nutzbar ist. Dies ist möglich, da die Riegelelemente 10, 10.1, 10.2, 10.3 und die dazu komplementären Aussparungen 25, 25.1, 25.2, 25.3 quer zur Mittellängsachse des Auslegers 2 symmetrisch angeordnet sind. Durch die schwalbenschwanzförmige Ausbildung der Riegelelemente 10, 10.1, 10.2, 10.3 tritt der gleiche Effekt betreffend die Belastung des Auslegers 2 sowie die daraus resultierende Zugkraft respektive den Formschluss in den als in Querrichtung wirkende Hinterschnitte dienenden Kerben 13.1, 13a.1 ein. Der erste Befestigungsabschnitt 8 ist - analog zur zuvor beschriebenen Konfiguration - im Inneren des Profils des Auslegers 2 untergebracht.

Figur 7 zeigt den zuvor beschriebenen Ausleger 2, befestigt mit einem Anschlussstück 4 an einer nicht näher dargestellten Wand mittels des zweiten Befestigungsabschnitts (hier nicht erkennbar). Verdeutlicht wird hier die trapezförmige Ausbildung des Profils des Auslegers 2 bezogen auf den Rücken 22 sowie die angeformten Seitenwände 23, 23.1: Der Abstand zwischen den beiden Seitenwänden 23, 23.1 verringert sich zu dem Rücken 22 hin. Das Profil verjüngt sich somit quer zur Längserstreckung desselben in Gewichtskraftrichtung F_{g}. Auf diese Weise kann zwischen den jeweiligen Seitenwänden 23, 23.1 und ihrem jeweiligen Fortsatz 24, 24.1 ein Anschlusselement 33 eingeclipst werden. An dem Anschlusselement 33 ist ein Kabeltrassenelement 34 mit nicht näher dargestellten Schrauben befestigt.

Die Erfindung ist anhand eines Ausführungsbeispiels beschrieben worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Kabeltragsystem
- 2: Ausleger
- 3: die Baugruppe tragendes Teil
- 4: Anschlussstück
- 5: Kopfstück
- 6: dem Anschlussstück gegenüberliegender Bereich
- 7: Festlegeabschnitt
- 8: Befestigungsabschnitt
- 9: Befestigungsabschnitt
- 10, 10.1, 10.2, 10.3: Riegelelement
- 11, 11.1, 11a, 11a.1: Eingreiffläche
- 12, 12.1: zurückversetzter Teil
- 13, 13.1, 13a, 13a.1: Kerbe
- 14: Stirnfläche
- 15: Hammerkopf
- 16: Kopf
- 17: Steg
- 18, 18.1: Stirnfläche
- 19: Biegekante
- 20: Aussparung im Befestigungsabschnitt
- 21: Aussparung im Festlegeabschnitt
- 22: Rücken
- 23,23.1: Seitenwand
- 24, 24.1: Fortsatz
- 25, 25.1, 25.2, 25.3: Aussparung im Ausleger
- 26, 26.1, 26.2, 26.3: Prägung
- 27: Spreiznase
- 28: Aussparung für Spreiznase
- 29, 29.1: längliche Aussparung
- 30: umgebender Bereich der länglichen Aussparung
- 31, 31.1: Abstützsteg
- 32: Bolzen
- 33: Anschlusselement
- 34: Kabeltrassenelement

- F_{g}: Gewichtskraftrichtung
- F_{b}: Befestigungskraftrichtung

## Patentansprüche

1. Baugruppe eines Kabeltragsystems (1) umfassend einen Ausleger (2) zum Abstützen einer Kabeltrasse sowie ein Anschlussstück (4) mit einem Festlegeabschnitt (7) zum Festlegen an dem Ausleger (2), wobei das Anschlussstück (4) in zumindest eine Aussparung (25, 25.1, 25.2, 25.3) in einer Wand (23, 23.1) des Auslegers (2) zum Ausbilden eines kraftübertragenden Formschlusses in Längserstreckungsrichtung des Auslegers (2) mit zumindest einem Riegelelement (10, 10.1, 10.2, 10.3) eingreift, und mit zumindest einem sich an den Festlegeabschnitt (7) in Längserstreckung des Auslegers (2) anschließenden Befestigungsabschnitt (8, 9) zum Anschließen an ein die Baugruppe tragendes Teil (3).

2. Baugruppe nach Anspruch 1, **dadurch gekennzeichnet, dass** das zumindest eine Riegelelement (10, 10.1, 10.2, 10.3) in der Ebene des Festlegeabschnitts (7) von diesem abragt.

3. Baugruppe nach einem der Ansprüche 1 oder 2, **dadurch gekennzeichnet, dass** der Ausleger (2) im Bereich zumindest eines Endabschnittes zumindest zwei einander gegenüberliegende Aussparungen (25, 25.1, 25.2, 25.3) aufweist, in die der Festlegeabschnitt (7) mit gegenüberliegenden, zu den Aussparungen (25, 25.1, 25.2, 25.3) des Auslegers (2) komplementären Riegelelementen (10, 10.1, 10.2, 10.3) eingreift.

4. Baugruppe nach einem der Ansprüche 1 bis 3, **dadurch gekennzeichnet, dass** das zumindest eine Riegelelement (10, 10.1, 10.2, 10.3) an seinem zu dem die Baugruppe tragenden Teil (3) weisenden Seite in Querrichtung durch eine Eingreiffläche (11, 11a), die zu dem Anschlussstück (4) weist, hinterschnitten ist.

5. Baugruppe nach einem der Ansprüche 1 bis 4, **dadurch gekennzeichnet, dass** das zumindest eine Riegelelement (10, 10.1, 10.2, 10.3) an seinem von dem die Baugruppe tragenden Teil (3) wegweisenden Seite in Querrichtung durch eine schräge Eingreiffläche (11.1, 11a.1), die zu dem Anschlussstück (4) weist, hinterschnitten ist.

6. Baugruppe nach einem der Ansprüche 1 bis 5, **dadurch gekennzeichnet, dass** der Ausleger (2) an zwei gegenüberliegenden Wänden (23, 23.1) zumindest zwei Aussparungen (25, 25.1, 25.2, 25.3) aufweist und das Anschlussstück (4) in seinem Festlegeabschnitt (7) zumindest zwei zu den Aussparungen (25, 25.1, 25.2, 25.3) komplementäre Riegelelemente (10, 10.1, 10.2, 10.3) aufweist.

7. Baugruppe nach einem der Ansprüche 1 bis 6, **dadurch gekennzeichnet, dass** der Festlegeabschnitt (7) symmetrisch zur Mittellängsachse des Auslegers (2) ausgebildet ist.

8. Baugruppe nach einem der Ansprüche 1 bis 7, **dadurch gekennzeichnet, dass** der Befestigungsabschnitt (8) nach Art eines Hammerkopfes (15) ausgebildet ist, der in eine in das die Baugruppe tragende Teil (3) eingebrachte, längliche Aussparung (29, 29.1) einbringbar und darin fixierbar ist.

9. Baugruppe nach Anspruch 8, **dadurch gekennzeichnet, dass** das Anschlussstück über zumindest einen, zu dem Kopf des Hammerkopfes weisenden Stützvorsprung verfügt, der zu dessen Kopf einen solchen Abstand aufweist, dass das Anschlussstück in die Aussparung des die Baugruppe tragenden Teils einbringbar ist und, wenn in der Aussparung befestigt, außenseitig an dem die Baugruppe tragenden Teil abgestützt ist.

10. Baugruppe nach einem der Ansprüche 1 bis 7, **dadurch gekennzeichnet, dass** der Befestigungsabschnitt (9) gegenüber dem Festlegeabschnitt (7) abgewinkelt ist.

11. Baugruppe nach einem der Ansprüche 1 bis 10, **dadurch gekennzeichnet, dass** das Anschlussstück (4) an gegenüberliegenden Enden des Festlegeabschnittes (7) über jeweils zumindest einen Befestigungsabschnitt (8, 9) verfügt und dass der eine Befestigungsabschnitt nach einem der Ansprüche 10 bis 13 und der andere Befestigungsabschnitt nach einem der Ansprüche 14 oder 15 ausgeführt ist.

12. Baugruppe nach einem der Ansprüche 1 bis 11, **dadurch gekennzeichnet, dass** zumindest das Riegelelement (10, 10.1, 10.2, 10.3), bevorzugt das Anschlussstück (4) eine größere Materialstärke aufweist als der Ausleger (2).

13. Baugruppe nach einem der Ansprüche 1 bis 12, **dadurch gekennzeichnet, dass** der Ausleger (2) als offenes Profil ausgebildet ist und dass die Öffnung des Profils, wenn der Ausleger (2) nur mit einem Endabschnitt an dem die Baugruppe tragenden Teil (3) angebunden ist, entgegen der Gewichtskraftrichtung (F_{g}) weist.

14. Baugruppe nach Anspruch 13, **dadurch gekennzeichnet, dass** das Profil über einen Rücken (22) sowie daran angeformte Seitenwände (23, 23.1) verfügt und der Festlegeabschnitt (7) in zumindest eine Seitenwand (23, 23.1) mit seinem zumindest einen Riegelelement (10, 10.1, 10.2, 10.3) eingreift.
